# EUROPEAN PATENT APPLICATION

(11) **EP 2 782 421 A1**
(43) Date of publication of application: **24.09.2014**
(21) Application number: 13182017.7
(22) Date of filing: 28.08.2013
(51) Int. Cl.: H05B 33/08

(54) **Lighting baton**

(30) Priority: 22.03.2013 JP 2013060274
(71) Applicant: Toshiba Lighting & Technology Corporation, Yokosuka-shi Kanagawa 237-8510 (JP)
(72) Inventor: Matsumoto, Hiromi, Kanagawa, 237-8510 (JP); Imahashi, Akinori, Kanagawa, 237-8510 (JP)
(74) Representative: Bokinge, Ole

(57) **Abstract**

According to one embodiment, a lighting baton includes at least one relay to switch between ON and OFF of power supply to at least one LED lighting load based on a control signal from outside.

## Description

### FIELD

Embodiments described herein relate generally to a lighting baton.

### BACKGROUND

Hitherto, a lighting control system to adjust the brightness of plural lighting devices to desired levels is installed in an indoor facility such as a hall or a theater. In the lighting control system, the plural lighting devices are attached to a lighting baton provided with plural attachment ports. The lighting baton is suspended from a ceiling by a wire rope or the like, and is lifted up and down, so that the height of the lighting devices is adjusted.

In recent years, an LED lighting device comes to be used as the lighting device connected to the lighting baton. The LED lighting device receives a dimming signal from a dimming console, and performs dimming from 0% to 100% according to the dimming signal. Besides, the LED lighting device receives a posture control signal as the need arises, and can change the lighting direction and the like.

However, in the lighting baton of the related art, although ON or OFF of the power supply can be performed in the unit of the lighting baton, ON or OFF of the power supply can not be individually performed for each of the lighting devices connected to the lighting baton. The reason is that this type of lighting device of the related art usually uses a bulb as a light source, and dimming of the bulb is performed by a dimmer provided separately from the lighting baton. That is, it is considered to be sufficient that the dimmer turns ON or OFF the lighting device.

The LED lighting device includes an LED and a lighting circuit to light and control the LED. When the power supply is ON, the lighting circuit operates even in a non-lighting state, so that standby power is consumed. That is, the lighting baton of the related art has a problem that if the power supply of the LED lighting device can not be individually turned ON or OFF, standby power increases.

### BRIEF DESCRIPTION OF THE DRAWINGS

FIG. 1 is a view showing a structure of a lighting control system including a lighting baton of an embodiment.
FIG. 2 is a view for explaining a detailed structure of an LED lighting device.
FIG. 3 is a view for explaining a detailed structure of an LED lighting circuit.

### DETAILED DESCRIPTION

In general, according to one embodiment, a lighting baton is a lighting baton to which at least one lighting load is connected, and includes at least one switching part to switch between ON and OFF of power supply to at least the one lighting load based on a control signal from outside.

According to this structure, standby power can be reduced by individually controlling the power supply of each of connected lighting loads.

Although the lighting load of the embodiment is an LED lighting device, no limitation is made to this, and the lighting load may be any lighting device including a lighting circuit.

Besides, the lighting baton includes an output part to output an ON or OFF state of the power supply to at least the one lighting load.

According to this structure, an operator can easily grasp the ON or OFF state of the power supply to the lighting load.

Besides, the lighting baton includes an electric leakage detection part to detect electric leakage of at least the one lighting load.

According to this structure, the LED lighting device in which electric leakage occurs can be specified.

Besides, in the lighting baton, when the electric leakage detection part detects the electric leakage of at least the one lighting load, the switching part turns OFF, based on the control signal from the outside, the power supply to the lighting load in which the electric leakage is detected.

According to this structure, all the power supply of at least the one lighting load connected to the lighting baton is not required to be turned OFF, and the safety can be improved.

Hereinafter, an embodiment of the invention will be described in detail with reference to the drawings.

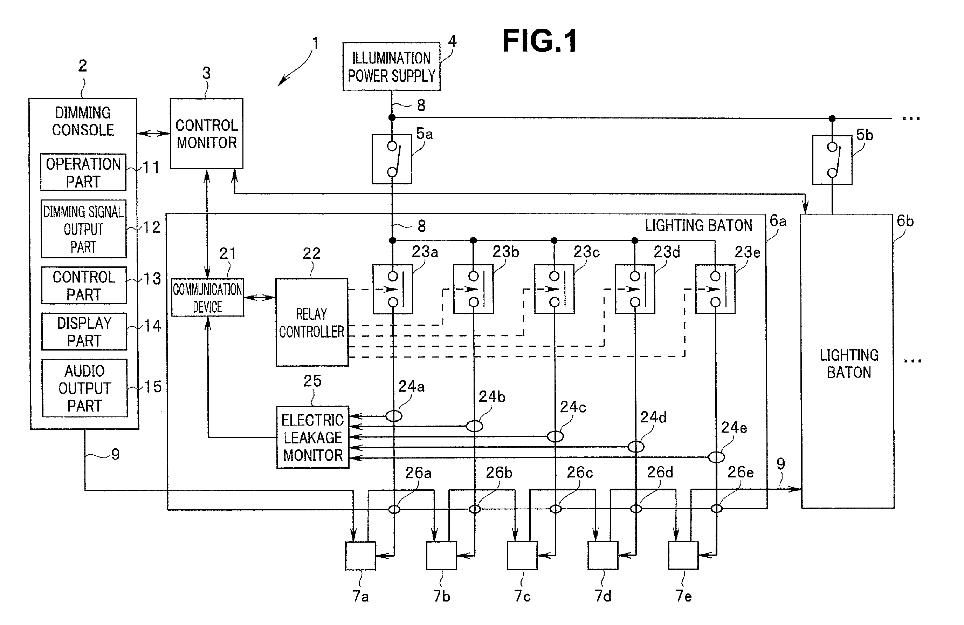

First, a structure of a lighting control system including a lighting baton according to one embodiment will be described with reference to FIG. 1.

FIG. 1 is a view showing the structure of the lighting control system including the lighting baton according to the embodiment.

As shown in FIG. 1, a lighting control system 1 is a system disposed in an indoor facility such as a hall or a theater, and includes a dimming console 2, a control monitor 3, an illumination power supply 4, plural switches 5a, 5b, ···, plural lighting batons 6a, 6b, ···, plural LED lighting devices 7a to 7e, a power supply cable 8, and a DMX cable 9.

The dimming console 2 includes an operation part 11, a dimming signal output part 12, a control part 13, a display part 14 and a sound output part 15. The lighting baton 6a includes a communication device 21, a relay controller 22, plural relays 23a to 23e, plural leakage current detectors 24a to 24e, an electric leakage monitor 25, and plural attachment parts 26a to 26e such as outlets. Incidentally, the other plural lighting batons including the lighting baton 6b also have the same structure as the lighting baton 6a.

The LED lighting devices 7a to 7e are respectively attached to the attachment parts 26a to 26e of the lighting baton 6a. The lighting baton 6a to which the LED lighting devices 7a to 7e are attached is suspended from the ceiling or the like of the indoor facility by a not-shown wire rope. The position of the lighting baton 6a from the ceiling or the like is adjusted by moving up and down the wire rope. Incidentally, the number of the LED lighting devices 7a to 7e attached to the lighting baton 6a is not limited to five, and may be four or less or six or more.

The illumination power supply 4 supplies power through the power cable 8 to the LED lighting devices 7a to 7e attached to the lighting baton 6a, and not-shown LED lighting devices attached to the lighting baton 6b.

Each of the switches 5a, 5b, ··· turns ON or OFF the power supply of the whole of each of the lighting batons 6a, 6b, ···. For example, when the switch 5a is switched ON, the power supply of the whole of the lighting baton 6a can be turned ON. When the switch 5a is switched OFF, the power supply of the whole of the lighting baton 6a can be turned OFF.

The power supply cable 8 is housed in the lighting baton 6a through the switch 5a and is wired. The relays 23a to 23e are connected in parallel to the power supply cable 8 wired in the lighting baton 6a, and power is supplied from the illumination power supply 4 to the LED lighting devices 7a to 7e through these relays 23a to 23e.

The relay controller 22 controls ON or OFF of the relays 23a to 23e, and individually controls ON or OFF of power supplies of the LED lighting devices 7a to 7e connected through the relays 23a to 23e. The individual control of ON or OFF of the power supplies of the LED lighting devices 7a to 7e is performed by the operation part 11 of the dimming console 2.

When the operator performs the operation for individually controlling ON or OFF of the LED lighting devices 7a to 7e by using the operation part 11, an ON or OFF control signal is outputted to the control monitor 3. The control monitor 3 controls and monitors the lighting batons 6a, 6b, ···. For example, when ON or OFF of the power supplies of the LED lighting devices 7a to 7e attached to the lighting baton 6a is controlled, the control monitor 3 outputs the ON or OFF control signal from the dimming console 2 to the communication device 21 of the lighting baton 6a.

The communication device 21 performs communication between the control monitor 3 and the relay controller 22 and between the control monitor 3 and the electric leakage monitor 25. The communication device 21 outputs the ON or OFF control signal from the control monitor 3 to the relay controller 22. By this, the relay controller 22 performs the ON or OFF control of the relays 23a to 23e. As stated above, each of the relays 23a to 23e constitutes a switching part to switch ON or OFF the power supply to the LED lighting devices 7a to 7e based on the ON or OFF control signal from the dimming console 2. However, the switching part may be constructed of another unit such as a semiconductor switch element.

Besides, the relay controller 22 monitors the ON or OFF state of the relays 23a to 23e, and outputs the ON or OFF state of the power supply to the LED lighting devices 7a to 7e to the control monitor 3 through the communication device 21. As stated above, the relay controller 22 constitutes an output part to output the ON or OFF state of the power supply to the LED lighting devices 7a to 7e.

The control monitor 3 outputs the ON or OFF state of the relays 23a to 23e to the dimming console 2. The control part 13 of the dimming console 2 controls to display the ON or OFF state of the relays 23a to 23e on, for example, the display part 14.

The leakage current detectors 24a to 24e are respectively provided between the relays 23a to 23e and the LED lighting devices 7a to 7e. The leakage current detectors 24a to 24e respectively detect the leakage currents of the LED lighting devices 7a to 7e attached to the lighting baton 6a, and outputs the detected currents to the electric leakage monitor 25.

The electric leakage monitor 25 monitors, based on the leakage currents detected by the leakage current detectors 24a to 24e, whether electric leakage occurs in the respective LED lighting devices 7a to 7e. When the electric leakage occurs in any one of the LED lighting devices 7a to 7e, the electric leakage monitor 25 outputs information of the currently leaking LED lighting device to the control monitor 3 through the communication device 21. As stated above, the leakage current detectors 24a to 24e and the electric leakage monitors 25 constitute an electric leakage detection part to detect electric leakage of the LED lighting devices 7a to 7e.

The control monitor 3 outputs the information of the currently leaking LED lighting device to the dimming console 2. The control part 13 of the dimming console 2 displays the information of the currently leaking LED lighting device on, for example, the display part 14. Alternatively, the control part controls to output the information of the currently leaking LED lighting device from the sound output part 15 by sound.

When the currently leaking LED lighting device is specified, the dimming console 2 outputs an ON or OFF control signal to turn OFF the relay connected to the currently leaking LED lighting device to the control monitor 3. For example, when electric leakage occurs in the LED lighting device 7a, the ON or OFF control signal to turn OFF the relay 23a is outputted to the control monitor 3. The ON or OFF control signal is outputted to the relay controller 22 through the communication device 21. On the basis of the ON or OFF control signal, the relay controller 22 turns OFF the relay 23a to which the currently leaking LED lighting device 7a is connected.

The dimming console 2 is an operation unit for operating the LED lighting devices 7a to 7e into a desired brightness dimming state, and transmits a dimming signal (DMX) corresponding to the operator's operation of the operation part 11 to the LED lighting devices 7a to 7e through the DMX cable 9. For example, the transmission of the dimming signal is performed in accordance with the standard of DMX512 (1990) (The United States Institute for Theatre Technology (USITT) standards).

The DMX cable 9 is housed in the lighting batons 6a, 6b, ··· and is wired. By this, the dimming signal is transmitted to the LED lighting devices 7a to 7e connected to the lighting baton 6a, and not-shown LED lighting devices connected to the lighting baton 6b.

The LED lighting devices 7a to 7e as the lighting loads generate PWM signals with duty ratios determined according to the dimming signal outputted from the dimming signal output part 12, and illuminate with the brightness according to the dimming signal. Incidentally, the lighting load connected to the lighting baton 6a is not limited to the LED lighting devices 7a to 7e, and may be a lighting device including a lighting circuit or a lighting device not including a lighting circuit.

Here, a detailed structure of the LED lighting device will be described. Incidentally, since the LED lighting devices 7a to 7e have the same structure, a description will be made while using the LED lighting device 7a as an example.

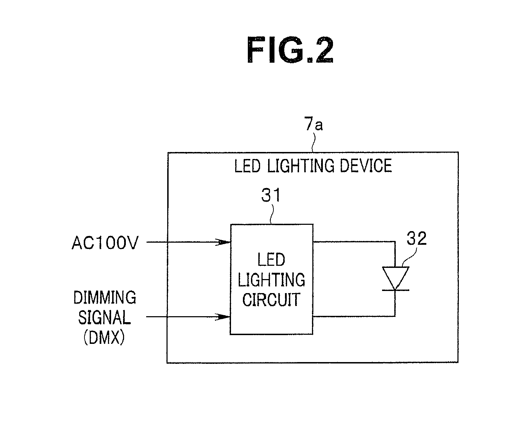

FIG. 2 is a view for explaining the detailed structure of the LED lighting device 7a.

As shown in FIG. 2, the LED lighting device 7a includes an LED lighting circuit 31 and an LED 32. The power (AC 100V) from the illumination power supply 4 and the dimming signal (DMX) from the dimming signal output part 12 are inputted to the LED lighting circuit 31. As described later, the LED lighting circuit 31 converts AC power into DC power and then decreases the converted DC power. The LED lighting circuit 31 generates the PWM signal with the duty ratio determined according to the dimming signal, and controls ON or OFF of the DC power by the PWM signal, so that the LED 32 is lit at a desired brightness.

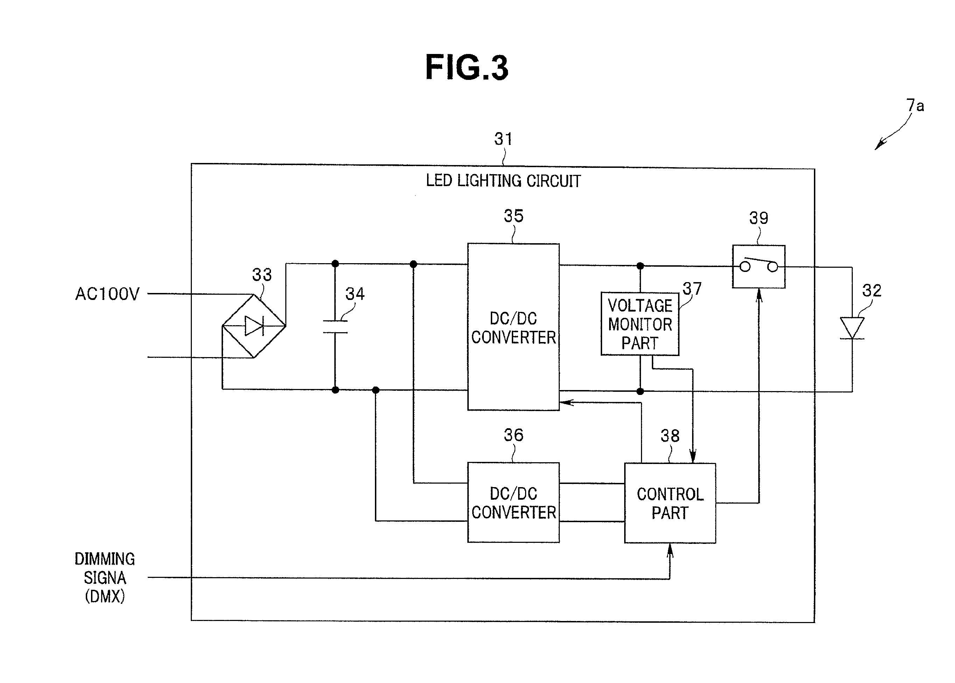

Here, a detailed structure of the LED lighting circuit 31 will be described. FIG. 3 is a view for explaining the detailed structure of the LED lighting circuit 31.

As shown in FIG. 3, the LED lighting circuit 31 includes a rectifier 33, a capacitor 34, DC/DC converters 35 and 36, a voltage monitor part 37, a control part 38 and a switch 39.

AC 100V is inputted to the rectifier 33 from the illumination power supply 4. The rectifier 33 converts the inputted AC 100V into an undulating voltage and outputs. The undulating voltage outputted from the rectifier 33 is smoothed by the capacitor 34, and then is inputted to the DC/DC converters 35 and 36.

The DC/DC converter 35 decreases the inputted DC 140V to, for example, DC 12V and outputs the voltage to the switch 39. Similarly, the DC/DC converter 36 decreases the inputted DC 140V to, for example, DC 12V and outputs the voltage to the control part 38.

The voltage monitor part 37 monitors the voltage outputted from the DC/DC converter 35, and outputs to the control part 38. The control part 38 controls the DC/DC converter 35 based on a monitor signal from the voltage monitor part 37, so that the output becomes DC 12V.

Besides, the dimming signal is inputted to the control part 38. The control part 38 generates the PWM signal with the duty ratio determined according to the inputted dimming signal, and outputs the signal to the switch 39. The switch 39 performs ON or OFF operation based on the PWM signal, and outputs the inputted DC 12V to the LED 32. By this, the LED 32 illuminates at a dimming level of 0% to 100%.

Hitherto, the power supplies of the LED lighting devices 7a to 7e constructed as stated above can not be individually turned ON or OFF, and the switch 5a is used to turn ON or OFF the power supply in the unit of the lighting baton 6a. For example, when the LED lighting device 7a is individually turned ON or OFF, the control part 38 of the LED lighting device 7a generates a PWM signal to always turn OFF the switch 39, and outputs the signal to the switch 39, so that dimming of the LED 32 is made 0%. However, also when the LED lighting device 7a is OFF, the power is always supplied to the control part 38. Thus, standby power is generated in the LED lighting device 7a.

On the other hand, in the lighting baton 6a of this embodiment, the relay controller 22 controls ON or OFF of the relays 23a to 23e connected to the LED lighting devices 7a to 7e, so that the power supplies of the LED lighting devices 7a to 7e can be individually turned ON or OFF. For example, when the relay 23a is turned OFF, the LED lighting device 7a can be turned OFF. In this case, the power supply from the illumination power supply 4 to the LED lighting circuit 31 of the LED lighting device 7a is stopped. By this, since the power supply to the control part 38 of the LED lighting circuit 31 is stopped, standby power is not generated in the LED lighting device 7a. As a result, in the lighting baton 6a, the power supplies of the connected LED lighting devices 7a to 7e are individually turned ON or OFF, so that standby power can be reduced.

Thus, according to the lighting baton of this embodiment, the power supplies of the connected lighting devices are individually controlled, so that standby power can be reduced.

Besides, in the lighting baton 6a of this embodiment, the leakage current detectors 24a to 24e and the electric leakage monitor 25 individually monitor the electric leakages of the connected LED lighting devices 7a to 7e. In the lighting baton 6a, when the LED lighting device in which the electric leakage occurs is specified, the relay connected to the LED lighting device is turned OFF. Thus, only the power supply of the LED lighting device in which the electric leakage occurs can be turned OFF. By this, in the lighting baton 6a, when the electric leakage occurs in any one of the connected LED lighting devices 7a to 7e, all the power supplies of the LED lighting devices 7a to 7e connected to the lighting baton 6a are not required to be turned OFF. Thus, the influence on the illumination is minimized, and the safety can be improved.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A lighting baton to which at least one lighting load is connected, comprising:
at least one switching part to switch between ON and OFF of power supply to at least the one lighting load based on a control signal from outside.

2. The lighting baton according to claim 1, further comprising an output part to output an ON or OFF state of the power supply to at least the one lighting load.

3. The lighting baton according to claim 1 or 2, further comprising an electric leakage detection part to detect electric leakage of at least the one lighting load.

4. The lighting baton according to claim 3, wherein when the electric leakage detection part detects electric leakage of at least the one lighting load, the switching part turns OFF, based on the control signal from the outside, the power supply to the lighting load in which the electric leakage is detected.

5. The lighting baton according to any one of claims 1 to 4, wherein the lighting load corresponding to at least the one switching part includes an LED and a lighting circuit to light and control the LED.
